# EUROPÄISCHE PATENTANMELDUNG

(11) **EP 3 579 388 A1**
(43) Veröffentlichungstag der Anmeldung: **11.12.2019**
(21) Anmeldenummer: 18176033.1
(22) Anmeldetag: 05.06.2018
(51) Int. Cl.: H02K 5/02, H02K 5/24, H02K 9/16

(54) **ELEKTRISCHE MASCHINE MIT BLECHGEHÄUSE, DESSEN HOHLRÄUME MIT SAND GEFÜLLT SIND**

(71) Anmelder: Siemens Aktiengesellschaft, 80333 München (DE)
(72) Erfinder: Müller-Knakrügge, Thomas, 90537 Feucht (DE)

(57) **Zusammenfassung**

Eine elektrische Maschine weist ein erstes Aktivteil (2), ein zweites Aktivteil (3) und ein Maschinengehäuse (4) auf. Eines der beiden Aktivteile (2,3) ist in Lagern (5) gelagert, so dass dieses Aktivteil (2,3) um eine Rotationsachse (6) rotierbar ist. Das andere der beiden Aktivteile (2, 3) ist relativ zum Maschinengehäuse (4) drehfest angeordnet. Das erste Aktivteil (2) umgibt das zweite Aktivteil (3) radial außen. Das Maschinengehäuse (4) umgibt das erste Aktivteil (3) radial außen. Das Maschinengehäuse (4) besteht aus miteinander geschweißten Blechen (8), so dass das Maschinengehäuse (4) eine Anzahl von Hohlräumen (9) aufweist, die radial außerhalb des ersten Aktivteils (2) angeordnet sind. Zumindest ein Teil der Hohlräume (9) ist mit einem körnigen Material (10) gefüllt, das elektrisch isolierend, magnetisch neutral und nicht brennbar ist.

## Beschreibung

Die vorliegende Erfindung geht aus von einer elektrischen Maschine,
- wobei die elektrische Maschine ein erstes Aktivteil, ein zweites Aktivteil und ein Maschinengehäuse aufweist,
- wobei eines der beiden Aktivteile in Lagern gelagert ist, so dass dieses Aktivteil um eine Rotationsachse rotierbar ist, und das andere der beiden Aktivteile relativ zum Maschinengehäuse drehfest angeordnet ist,
- wobei das erste Aktivteil das zweite Aktivteil bezüglich der Rotationsachse radial außen umgibt,
- wobei das Maschinengehäuse das erste Aktivteil bezüglich der Rotationsachse radial außen umgibt,
- wobei das Maschinengehäuse aus miteinander geschweißten Blechen besteht, so dass das Maschinengehäuse eine Anzahl von Hohlräumen aufweist, die bezüglich der Rotationsachse radial außerhalb des ersten Aktivteils angeordnet sind.

Die vorliegende Erfindung geht weiterhin aus von einer Arbeitsmaschine, wobei die Arbeitsmaschine eine Halterung aufweist, die mit dem Maschinengehäuse einer elektrischen Maschine verbunden ist.

Der Begriff "Arbeitsmaschine" dient im Rahmen der vorliegenden Erfindung lediglich der sprachlichen Unterscheidung von der elektrischen Maschine. Mit dem Begriff "Arbeitsmaschine" ist jegliche Maschine gemeint, welche das von der elektrischen Maschine bereitgestellte Drehmoment in eine mechanische Bewegung umsetzt. Die Bewegung kann eine Bewegung eines Teils der Arbeitsmaschine relativ zu einem anderen Teil der Arbeitsmaschine sein, beispielsweise das Drehen einer Werkstückspindel oder einer Werkzeugspindel einer Werkzeugmaschine. Ein anderes Beispiel ist eine Hubbewegung eines Spreaders eines Containerkrans. Auch kann es sich um eine Bewegung der Arbeitsmaschine als Ganzes relativ zu einem Untergrund handeln, beispielsweise bei einer Verwendung der elektrischen Maschine als Traktionsantrieb eines Elektroautos oder eines Schienenfahrzeugs.

Bei elektrischen Maschinen der eingangs genannten Art besteht das Problem, dass das Maschinengehäuse aufgrund seiner Bauart mechanische Schwingungen nur in geringem Umfang dämpft. Dies gilt sowohl für mechanische Schwingungen im engeren Sinne, also Vibrationen von Bauteilen, als auch für akustische Schwingungen. Dies führt beispielsweise dazu, dass innerhalb der elektrischen Maschine auftretende mechanische Schwingungen sehr gut nach außen (d.h. nach außerhalb der elektrischen Maschine) übertragen werden. Die mechanischen Schwingungen können beispielsweise durch Pendelmomente und Radialkraftwellen hervorgerufen sein. Darüber hinaus werden beim Hochlauf der elektrischen Maschine, bedingt durch die Vielfachen der Polzahl, sehr viele Eigenfrequenzen der elektrischen Maschine angeregt. Die mit den mechanischen Schwingungen verbundenen Geräusche werden von Menschen oftmals als sehr unangenehm empfunden. Die Hohlräume des Maschinengehäuses wirken wie ein Resonanzkörper und verstärken oftmals die hervorgerufenen Geräusche.

Zur Reduzierung des Geräuschpegels sind verschiedene Maßnahmen möglich. So ist es beispielsweise möglich, das Maschinengehäuse nicht aus miteinander geschweißten Blechen zu fertigen, sondern als Gussteil herzustellen. Mit dieser Maßnahme wird jedoch schlichtweg eine andersartige elektrische Maschine geschaffen. Weiterhin ist es denkbar, Blechzuschnitte anzupassen, sei es Blechzuschnitte der Aktivteile, sei es Blechzuschnitte des Maschinengehäuses. Diese Maßnahme ist komplex, führt nicht immer zum gewünschten Erfolg und kann weiterhin die elektromotorischen Parameter der elektrischen Maschine beeinflussen. Weiterhin ist es bekannt, auf das Maschinengehäuse sogenannte Schwerfolie oder Dämmschichten aus Schaumstoff oder Glasfasermatten aufzubringen. Durch diese Maßnahme vergrößert sich das effektive Volumen der elektrischen Maschine erheblich. Ferner verschlechtert sich die Wärmeabfuhr.

Die Aufgabe der vorliegenden Erfindung besteht darin, eine Möglichkeit zu schaffen, mittels derer auf einfache, kostengünstige und effiziente Weise die von einer elektrischen Maschine der eingangs genannten Art generierten mechanischen Schwingungen (einschließlich akustischer Schwingungen) reduziert und gedämmt werden können.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 7.

Erfindungsgemäß wird eine elektrische Maschine der eingangs genannten Art dadurch ausgestaltet, dass zumindest ein Teil der Hohlräume mit einem körnigen Material gefüllt ist, das elektrisch isolierend, magnetisch neutral und nicht brennbar ist.

In der Regel ist das zweite Aktivteil das in Lagern gelagerte Aktivteil, während das erste Aktivteil in dem Maschinengehäuse drehfest gehalten ist. In diesem Fall handelt es sich bei der elektrischen Maschine um eine übliche Innenläufermaschine, bei welcher der Stator (= das erste Aktivteil) den Rotor (= das zweite Aktivteil) radial außen umgibt. Prinzipiell ist die vorliegende Erfindung aber auch bei einer Außenläufermaschine einsetzbar.

Das körnige Material ist vorzugsweise ein Sand, insbesondere ein Quarzsand. Hierbei können nach Bedarf Feinsand, Mittelsand und Grobsand verwendet werden. Feinsand weist eine Körnung von 0,063 mm bis 0,2 mm auf, Mittelsand eine Körnung von 0,2 mm bis 0,63 mm und Grobsand eine Körnung von 0,63 mm bis 2 mm. Bevorzugt weist das körnige Material eine Körnung von maximal 1 mm auf.

In einer bevorzugten Ausgestaltung umgeben die mit dem körnigen Material gefüllten Hohlräume das erste Aktivteil orthogonal zur Rotationsachse gesehen im Wesentlichen vollständig. Dadurch kann eine optimale Schwingungsdämpfung und Schwingungsdämmung realisiert werden.

In einer alternativen Ausgestaltung sind die mit dem körnigen Material gefüllten Hohlräume orthogonal zur Rotationsachse gesehen in zwei einander diametral gegenüber liegenden Winkelbereichen angeordnet und liegen orthogonal zur Rotationsachse gesehen zwischen den beiden Winkelbereichen weitere Winkelbereiche, in denen sich keine Hohlräume befinden oder in denen die dort befindlichen Hohlräume nicht mit dem körnigen Material gefüllt sind. Dadurch kann mit minimalem Aufwand bereits eine recht gute Schwingungsdämpfung und Schwingungsdämmung realisiert werden. Insbesondere wird die Übertragung von Körperschall über die Winkelbereiche, in denen die mit dem körnigen Material gefüllten Hohlräume angeordnet sind, deutlich verringert.

Es ist möglich, dass in den mit dem körnigen Material gefüllten Hohlräumen parallel zur Rotationsachse verlaufende Rohre für den Durchfluss eines Kühlmediums durch die mit dem körnigen Material gefüllten Hohlräume angeordnet sind. Diese Ausgestaltung ermöglicht insbesondere eine effiziente Abfuhr von Verlustwärme, die im Betrieb der elektrischen Maschine auftritt. Das Kühlmedium kann ein gasförmiges Medium sein, insbesondere Luft. Es kann sich aber auch um ein flüssiges Kühlmedium handeln, insbesondere Wasser.

Die Aufgabe wird weiterhin durch eine Arbeitsmaschine mit den Merkmalen des Anspruchs 8 gelöst. Erfindungsgemäß wird eine Arbeitsmaschine der eingangs Art dadurch ausgestaltet, dass die elektrische Maschine als erfindungsgemäße elektrische Maschine ausgebildet ist und dass die Halterung mit Blechen des Maschinengehäuses der elektrischen Maschine verbunden ist, die unmittelbar an mit dem körnigen Material gefüllte Hohlräume angrenzen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Querschnitt durch eine elektrische Maschine,
- FIG 3: einen Querschnitt durch eine weitere elektrische Maschine und
- FIG 4: eine Arbeitsmaschine.

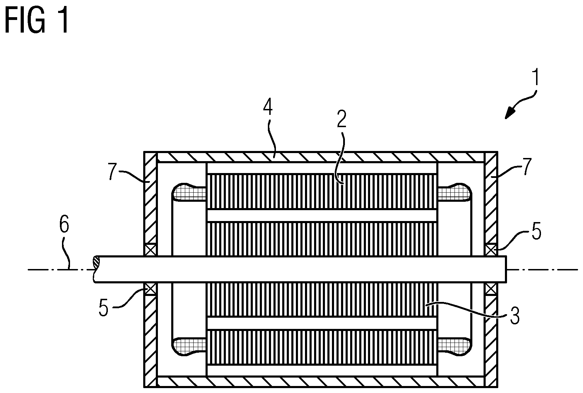

Gemäß FIG 1 weist eine elektrische Maschine 1 ein erstes Aktivteil 2, ein zweites Aktivteil 3 und ein Maschinengehäuse 4 auf. Eines der beiden Aktivteile 2, 3 ist in Lagern 5 gelagert, so dass dieses Aktivteil 2, 3 um eine Rotationsachse 6 rotierbar ist. Dieses Aktivteil 2, 3 entspricht dem Rotor der elektrischen Maschine 1. Das andere Aktivteil 3, 2 ist relativ zum Maschinengehäuse 4 drehfest angeordnet. Es entspricht dem Stator der elektrischen Maschine 1. Die Lager 5 können beispielsweise in Lagerschilden 7 der elektrischen Maschine 1 angeordnet sein, die mit dem Maschinengehäuse 4 verbunden sind.

Soweit nachfolgend die Begriffe "axial", "radial" und "tangential" verwendet werden, sind sie stets auf die Rotationsachse 6 bezogen. "Axial" ist eine Richtung parallel zur Rotationsachse 6. "Radial" ist eine Richtung orthogonal zur Rotationsachse 6 direkt auf die Rotationsachse 6 zu bzw. von ihr weg. "Tangential" ist eine Richtung, die sowohl orthogonal zur Axialrichtung als auch orthogonal zur Radialrichtung gerichtet ist. "Tangential" ist also eine Richtung, die bei einer konstanten Axialposition in einem konstanten radialen Abstand von der Rotationsachse 6 kreisförmig um die Rotationsachse 6 herum gerichtet ist.

Das erste Aktivteil 2 umgibt das zweite Aktivteil 3 radial außen. Das Maschinengehäuse 4 wiederum umgibt das erste Aktivteil 2 radial außen. In der Regel ist das erste Aktivteil 2 in dem Maschinengehäuse 4 drehfest gehalten (= Stator). Das zweite Aktivteil 3 ist in diesem Fall das in den Lagern 5 drehbar gelagerte Aktivteil (= Rotor).

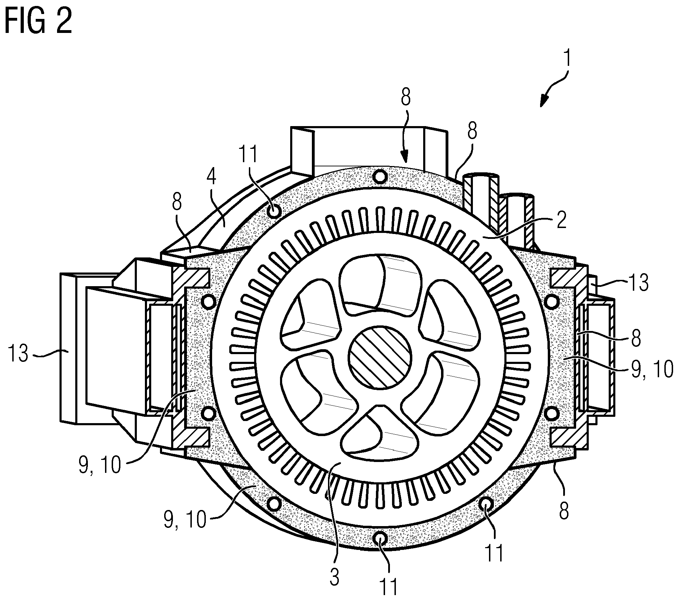

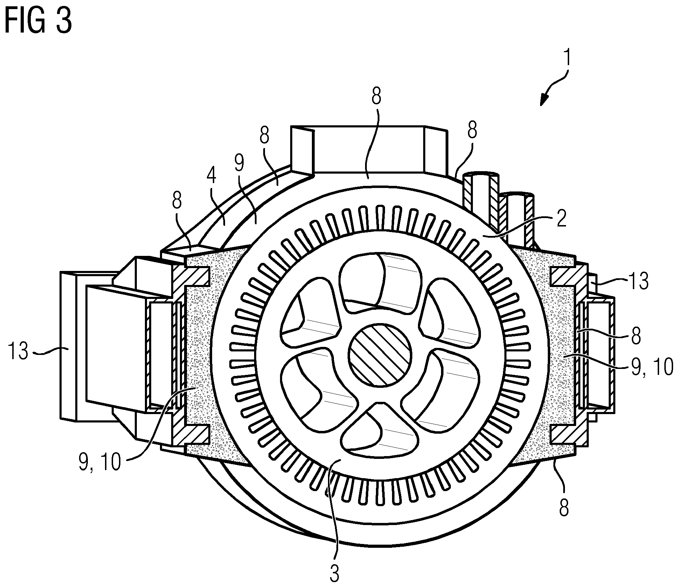

Das Maschinengehäuse 4 besteht gemäß den Darstellungen der FIG 2 und 3 aus Blechen 8. In den FIG 2 und 3 sind nur einige der Bleche 8 mit ihrem Bezugszeichen versehen, um die FIG 2 und 3 nicht unnötig zu überfrachten. Die Bleche 8 sind miteinander geschweißt. Aufgrund dieser Konstruktion weist das Maschinengehäuse 4 eine Anzahl von Hohlräumen 9 auf. Diese Hohlräume 9 sind radial außerhalb des ersten Aktivteils 2 angeordnet. Auch von den Hohlräumen 9 sind in den FIG 2 und 3 nur einige mit ihrem Bezugszeichen versehen, um die FIG 2 und 3 nicht unnötig zu überfrachten.

Entsprechend der Darstellung in den FIG 2 und 3 ist zumindest ein Teil der Hohlräume 9 mit einem körnigen Material 10 gefüllt. Das körnige Material 10 ist ein Material, das elektrisch isolierend, magnetisch neutral und nicht brennbar ist. Vorzugsweise ist es auch ungiftig. Ein Beispiel eines geeigneten körnigen Materials 10 ist ein Sand, insbesondere ein Quarzsand. Sand kann gemäß der Definition von Sand eine Korngröße aufweisen, die von 0,063 mm bis 2 mm reicht. Vorzugsweise weist der Sand bzw. allgemein das körnige Material 10 eine Körnung von maximal 1 mm auf. Es kann sich bei dem körnigen Material 10 um ein Material handeln, dessen einzelne Körner rund sind. Vorzugsweise handelt es sich aber um ein Material, dessen einzelne Körner kantig sind.

Entsprechend der Darstellung in FIG 2 ist es möglich, dass die mit dem körnigen Material 10 gefüllten Hohlräume 9 das erste Aktivteil 2 tangential im Wesentlichen vollständig umgeben. Alternativ ist es entsprechend der Darstellung in FIG 3 möglich, dass die mit dem körnigen Material 10 gefüllten Hohlräume 9 tangential gesehen in zwei einander diametral gegenüber liegenden Winkelbereichen angeordnet sind und in Tangentialrichtung gesehen zwischen diesen beiden Winkelbereichen weitere Winkelbereiche liegen, in denen sich entweder keine Hohlräume befinden oder sich zwar Hohlräume 9 befinden, diese Hohlräume 9 jedoch nicht mit dem körnigen Material gefüllt sind.

In manchen Fällen kann es erforderlich sein, dass in den mit dem körnigen Material 10 gefüllten Hohlräumen 9 Rohre 11 angeordnet werden. Die Rohre 11 werden vor dem Befüllen der Hohlräume 9 mit dem körnigen Material 10 in die Hohlräume 9 eingebracht. Die Rohre 11 erstrecken sich in Axialrichtung. Sie dienen dem Durchfluss eines gasförmigen oder flüssigen Kühlmediums. Ein Durchfluss des Kühlmediums durch die mit dem körnigen Material 10 gefüllten Hohlräume 9 ist also möglich, obwohl die Hohlräume 9 mit dem körnigen Material 10 gefüllt sind. Die Rohre 11 sind nur in der Ausgestaltung der elektrischen Maschine 1 gemäß FIG 2 dargestellt. Sie sind aber auch bei der Ausgestaltung der elektrischen Maschine 1 gemäß FIG 3 realisierbar. Auch von den Rohren 11 sind in FIG 2 nur einige mit ihrem Bezugszeichen versehen, um FIG 2 nicht unnötig zu überfrachten.

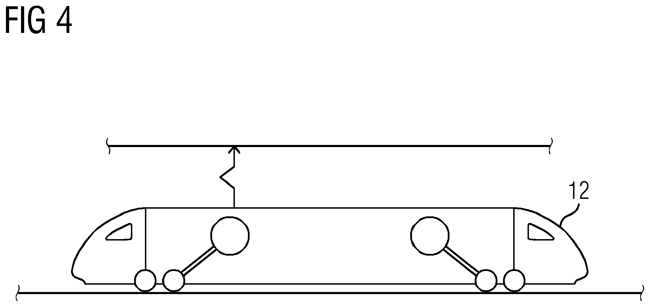

Die erfindungsgemäße elektrische Maschine kann prinzipiell bei jeder Arbeitsmaschine eingesetzt werden. Der Begriff "Arbeitsmaschine" ist in diesem Zusammenhang breit zu verstehen. Es kommt nur darauf an, dass die Arbeitsmaschine das von der elektrischen Maschine 1 bereitgestellte Drehmoment in eine mechanische Bewegung umsetzt. Die Bewegung kann eine Bewegung eines Teils der Arbeitsmaschine relativ zu einem anderen Teil der Arbeitsmaschine sein. Auch kann es sich um eine Bewegung der Arbeitsmaschine als Ganzes relativ zu einem Untergrund handeln, beispielsweise bei einer Verwendung der elektrischen Maschine als Traktionsantrieb eines Elektroautos oder eines Schienenfahrzeugs. Rein beispielhaft ist in FIG 4 ein Schienenfahrzeug 12 dargestellt, dessen elektrische Maschinen 1 als erfindungsgemäße elektrische Maschinen 1 ausgebildet sind.

Das Schienenfahrzeug 12 bzw. allgemein die Arbeitsmaschine weist - siehe die FIG 2 und 3 - eine Halterung 13 auf. Die Halterung 13 ist mit dem Maschinengehäuse 4 der elektrischen Maschine 1 verbunden. Dadurch ist die elektrische Maschine 1 an dem Schienenfahrzeug 12 bzw. allgemein an der Arbeitsmaschine befestigt. Die Halterung 13 ist entsprechend der Darstellung in den FIG 2 und 3 mit Blechen 8 des Maschinengehäuses 4 verbunden, die unmittelbar an Hohlräume 9 angrenzen, welche mit dem körnigen Material 10 gefüllt sind. Dadurch wird insbesondere die Übertragung von Körperschall von der elektrischen Maschine 1 auf die Halterung 13 minimiert.

Zusammengefasst betrifft die vorliegende Erfindung somit folgenden Sachverhalt:
Eine elektrische Maschine weist ein erstes Aktivteil 2, ein zweites Aktivteil 3 und ein Maschinengehäuse 4 auf. Eines der beiden Aktivteile 2, 3 ist in Lagern 5 gelagert, so dass dieses Aktivteil 2, 3 um eine Rotationsachse 6 rotierbar ist. Das andere der beiden Aktivteile 2, 3 ist relativ zum Maschinengehäuse 4 drehfest angeordnet. Das erste Aktivteil 2 umgibt das zweite Aktivteil 3 radial außen. Das Maschinengehäuse 4 umgibt das erste Aktivteil 3 radial außen. Das Maschinengehäuse 4 besteht aus miteinander geschweißten Blechen 8, so dass das Maschinengehäuse 4 eine Anzahl von Hohlräumen 9 aufweist, die radial außerhalb des ersten Aktivteils 2 angeordnet sind. Zumindest ein Teil der Hohlräume 9 ist mit einem körnigen Material 10 gefüllt, das elektrisch isolierend, magnetisch neutral und nicht brennbar ist.

Die vorliegende Erfindung weist viele Vorteile auf. Insbesondere ist sie einfach und ohne Umkonstruktion einer bestehenden elektrischen Maschine auf einfache und kostengünstige Weise realisierbar. Die Geräuschentwicklung kann um 10-15 dB gesenkt werden, ohne die Größe der elektrischen Maschine 1 vergrößern oder die Leistungsfähigkeit der elektrischen Maschine 1 reduzieren zu müssen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine ein erstes Aktivteil (2), ein zweites Aktivteil (3) und ein Maschinengehäuse (4) aufweist,
- wobei eines der beiden Aktivteile (2,3) in Lagern (5) gelagert ist, so dass dieses Aktivteil (2, 3) um eine Rotationsachse (6) rotierbar ist, und das andere der beiden Aktivteile (2,3) relativ zum Maschinengehäuse (4) drehfest angeordnet ist,
- wobei das erste Aktivteil (2) das zweite Aktivteil (3) bezüglich der Rotationsachse (6) radial außen umgibt,
- wobei das Maschinengehäuse (4) das erste Aktivteil (3) bezüglich der Rotationsachse (6) radial außen umgibt,
- wobei das Maschinengehäuse (4) aus miteinander geschweißten Blechen (8) besteht, so dass das Maschinengehäuse (4) eine Anzahl von Hohlräumen (9) aufweist, die bezüglich der Rotationsachse (6) radial außerhalb des ersten Aktivteils (2) angeordnet sind,
**dadurch gekennzeichnet,**
**dass** zumindest ein Teil der Hohlräume (9) mit einem körnigen Material (10) gefüllt ist, das elektrisch isolierend, magnetisch neutral und nicht brennbar ist.

2. Elektrische Maschine nach Anspruch 1, **dadurch gekennzeichnet , dass** das zweite Aktivteil (3) das in Lagern (5) gelagerte Aktivteil ist und dass das erste Aktivteil (2) in dem Maschinengehäuse (4) drehfest gehalten ist.

3. Elektrische Maschine nach Anspruch 1 oder 2, **dadurch gekennzeichnet , dass** das körnige Material (10) ein Sand ist, insbesondere ein Quarzsand.

4. Elektrische Maschine nach Anspruch 1, 2 oder 3, **dadurch gekennzeichnet , dass** das körnige Material (10) eine Körnung von maximal 1 mm aufweist.

5. Elektrische Maschine nach einem der Ansprüche 1 bis 4,
**dadurch gekennzeichnet, dass** die mit dem körnigen Material (10) gefüllten Hohlräume (9) das erste Aktivteil (2) orthogonal zur Rotationsachse (6) gesehen im wesentlichen vollständig umgeben.

6. Elektrische Maschine nach einem der Ansprüche 1 bis 4,
**dadurch gekennzeichnet , dass** die mit dem körnigen Material (10) gefüllten Hohlräume (9) orthogonal zur Rotationsachse (6) gesehen in zwei einander diametral gegenüber liegenden Winkelbereichen angeordnet sind und dass orthogonal zur Rotationsachse (6) gesehen zwischen den beiden Winkelbereichen weitere Winkelbereiche liegen, in denen sich keine Hohlräume befinden oder in denen die dort befindlichen Hohlräume (9) nicht mit dem körnigen Material gefüllt sind.

7. Elektrische Maschine nach einem der obigen Ansprüche,
**dadurch gekennzeichnet , dass** in den mit dem körnigen Material (10) gefüllten Hohlräumen (9) parallel zur Rotationsachse (6) verlaufende Rohre (11) für den Durchfluss eines Kühlmediums durch die mit dem körnigen Material (10) gefüllten Hohlräume (9) angeordnet sind.

8. Arbeitsmaschine, wobei die Arbeitsmaschine eine Halterung (13) aufweist, die mit dem Maschinengehäuse (4) einer elektrischen Maschine (1) verbunden ist, **dadurch gekennzeichnet, dass** die elektrische Maschine (1) als elektrische Maschine nach einem der obigen Ansprüche ausgebildet ist und dass die Halterung (13) mit Blechen (8) des Maschinengehäuses (4) der elektrischen Maschine (1) verbunden ist, die unmittelbar an mit dem körnigen Material (10) gefüllte Hohlräume (9) angrenzen.
